# EUROPEAN PATENT SPECIFICATION

(11) **EP 3 034 329 B1**
(45) Date of publication and mention of the grant of the patent: **28.08.2019**
(21) Application number: 15200214.3
(22) Date of filing: 15.12.2015
(51) Int. Cl.: B60C 9/06, B60C 9/09, B60C 9/04

(54) **AIRCRAFT TIRE WITH DIFFERENT MODULUS PLY**
FLUGZEUGREIFEN MIT LAGE MIT UNTERSCHIEDLICHEM ELASTIZITÄTSMODUL
PNEU D'AVION À NAPPE À MODULE D'ÉLASTICITÉ DIFFÉRENT

(30) Priority: 16.12.2014 US 201462092473 P; 11.09.2015 US 201514851714
(43) Date of publication of application: 22.06.2016
(73) Proprietor: The Goodyear Tire & Rubber Company, Akron, Ohio 44316 (US)
(72) Inventor: UEYOKO, Kiyoshi, Copley, OH 44321 (US); BOEHLEFELD, Robert John, Brecksville, OH 44141 (US)
(74) Representative: Kutsch, Bernd

(56) References cited:
- GB-A- 2 104 011
- JP-A- H0 268 207
- JP-A- 2009 083 519
- US-A1- 2012 037 290

## Description

### Field of the Invention

This invention relates to a pneumatic tire having a carcass and preferably also a belt reinforcing structure, and more particularly to high speed heavy load tires such as those used on aircraft.

### Background of the Invention

The radial carcass reinforcements of aircraft tires generally comprise several plies of textile cords, which are anchored to at least one annular bead member. A first group of reinforcing plies are generally wound around said annular bead member from the inside to the outside, forming turn-ups, the respective ends of which are radially spaced from the axis of rotation of the tire. The second group of plies are generally wound around the annular bead member from the outside to the inside of the tire.

Aircraft tires typically use numerous layers of ply which can significantly contribute to the tire weight. The numerous layers of ply may result in bead durability issues. It is thus desired to provide a lightweight efficient tire structure having improved bead durability. It is a further desired to provide an improved bead structure wherein the use of inside turn-up plies and outside turndown plies and their respective locations are optimized. Thus an improved aircraft tire is needed, which is capable of meeting high speed, high load and with reduced weight.

JP-H02-68207 describes a tire in accordance with the preamble of claim 1.

GB-A-2 104 011 describes a pneumatic tire having a carcass with an axially inner ply wound around the bead core forming a turn-up, and an axially outer ply which extends down from the tread towards the bead core and axially outward of the bead core. The axially inner ply is formed using reinforcement having a higher break strength than the reinforcement of the axially outer ply.

JP-A-2009-083519 shows an aircraft tire having two turn-up plies and one down ply in the carcass.

### Summary of the Invention

The invention relates to a tire in accordance with claim 1.

Dependent claims refer to preferred embodiments of the invention.

A pneumatic tire in accordance with a preferred aspect of the present invention includes two annular bead portions, a carcass, and a belt reinforcement layer. The carcass extends between the bead portions through sidewall portions and a tread portion and includes at least two axially inner plies which extend down from the tread and axially inward of the bead core, said at least two axially inner plies being wound around the bead core forming respective turn-ups, each turnup being located axially outward of the bead core; said carcass further including a first axially outer ply which extends down from the tread towards the bead core and positioned axially outward of the bead core, wherein at least one of the axially inner plies has a higher strength or a higher modulus, i. e. a higher 100 percent Modulus and/or a higher 300 percent Modulus, than the other plies.

### Definitions

"100 percent Modulus" means the force in MegaPascals (MPa) required to produce 100 percent elongation (e. g., stretch to two times original length).

"300 percent Modulus" or "M300 modulus" means the force in MegaPascals (MPa) required to produce 300 percent elongation (e.g., stretch to four times original length).

"Apex" means an elastomeric filler located radially above the bead core and between the plies and the turnup ply or axially outside the turnup ply.

"Axial" and "axially" are used herein to refer to lines or directions that are parallel to the axis of rotation of the tire.

"Bead" means that part of the tire comprising an annular tensile member wrapped by ply cords and shaped, with or without other reinforcement elements such as flippers, chippers, apexes, toe guards and chafers, to fit the design rim.

"Carcass" means the tire structure apart from the belt structure, tread, undertread, and sidewall rubber over the plies, but including the beads.

"Chafer" refers to a preferably narrow strip of material placed around the exterior of the bead to protect bead structures from the rim, distribute flexing radially above the rim, and to better seal the tire to the rim.

"Chipper" refers to a preferably narrow band of fabric or cords such as steel cords located in the bead area whose function is to reinforce the bead area and stabilize the radially inwardmost part of the sidewall.

"Circumferential" means lines or directions extending along the perimeter of the surface of the annular tire parallel to the Equatorial Plane (EP) and perpendicular to the axial direction; it can also refer to the direction of the sets of adjacent circular curves whose radii define the axial curvature of the tread, as viewed in cross section.

"Cord" means one of the reinforcement strands which the reinforcement structures of the tire comprise.

"Denier" means the weight in grams per 9000 meters (unit for expressing linear density). Dtex means the weight in grams per 10,000 meters.

"Density" means weight per unit length.

"Equatorial plane (EP)" means the plane perpendicular to the tire's axis of rotation and passing through the center of its tread; or the plane containing the circumferential centerline of the tread.

"Fabric" means a network of essentially unidirectionally extending cords, which may be twisted, and which in turn are composed of a plurality of a multiplicity of filaments (which may also be twisted) of a preferably high modulus material.

"Fiber" is a unit of matter, either natural or man-made that forms the basic element of filaments. Characterized by having a length at least 100 times its diameter or width.

"Filament count" means the number of filaments that make up a yarn. Example: 1000 denier polyester has approximately 190 filaments.

"Flipper" refers to a reinforcing fabric around the bead wire for strength and to tie the bead wire in the tire body.

"Gauge" refers generally to a measurement, and specifically to a thickness measurement.

"Load Range" means load and inflation limits for a given tire used in a specific type of service as defined by tables in The Tire and Rim Association, Inc.

"Normal Load" means the specific design inflation pressure and load assigned by the appropriate standards organization for the service condition for the tire.

"Ply" means a cord-reinforced layer of rubber-coated radially deployed or otherwise parallel cords.

"Radial" and "radially" are used to mean directions radially toward or away from the axis of rotation of the tire.

"Radial Ply Structure" means the one or more carcass plies or which at least one ply has reinforcing cords oriented at an angle of between 65° and 90° with respect to the equatorial plane of the tire.

"Radial Ply Tire" means a belted or circumferentially-restricted pneumatic tire in which at least one ply has cords which extend from bead to bead are laid at cord angles between 65° and 90° with respect to the equatorial plane of the tire.

"Turnup end" means the portion of a carcass ply that turns upward (i.e., radially outward) from the beads about which the ply is wrapped.

### Brief Description of the Drawings

The present invention will be described by way of example and with reference to the accompanying drawing, in which:
Figure 1 is an example schematic partial cross-sectional view of a bead structure in accordance with the present invention.

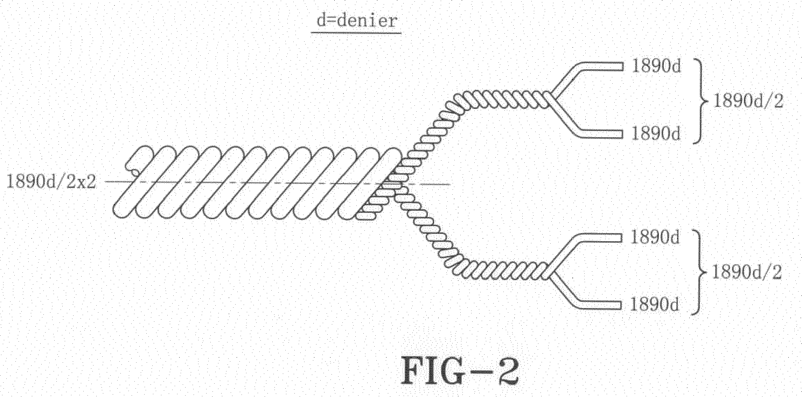

Figure 2 is an exemplary schematic showing the cable construction of the ply cords.

### Detailed Description of Example Embodiments of the Present Invention

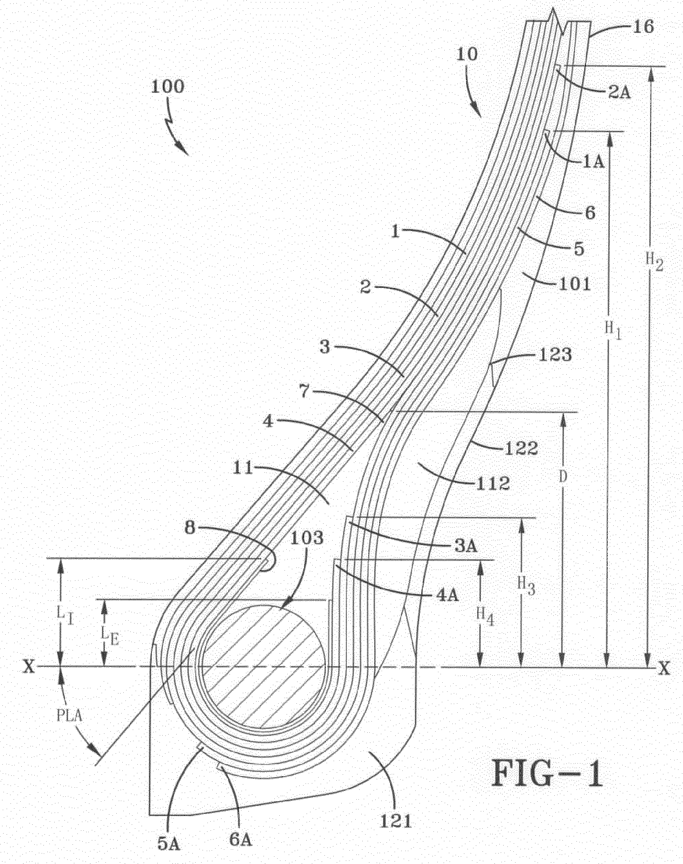

Figure 1 schematically shows a partial cross section of an example tire bead structure 100 of a pneumatic tire in accordance with the present invention. The example tire shown is that of a standard size tire 50x20R22 with a load rating of 57,100 pounds (25900 kg) and a pressure rating of 220 psi (1516847 Pa). Such a structure 100 may produce excellent durability and reduced chafing at the rim. In Figure 1, the tire is preferably a radial aircraft tire.

A carcass reinforcement 10 is preferably formed of four axially inner plies 1, 2, 3 and 4, and preferably two axially outer plies 5, 6. The cross section of the bead core 103 may be radially surmounted by a filler or first apex 11 of an elastomeric mixture having substantially the shape of a triangle in cross-section, the terminal end 7 of which extends radially from the axis of rotation of the tire a distance D from a reference line XX extending axially through the center of the bead core. The axially inner carcass plies 1, 2, 3, 4 extend down from the tread and are positioned axially inward and are wrapped around the bead core 103, forming turn-ups 1A, 2A, 3A, 4A respectively. The turn-up 1A of the axially innermost carcass ply 1 may have its turnup end spaced radially from the line XX by the amount H₁, which, for example, may be 116 mm or 1.5 times the apex height or the distance D, 56mm.

The distance D is preferably 56 mm or in a range of from 48 to 64 mm or 52 mm to 60 mm. The amount H₁ is preferably 116 mm or in a range of from 100 mm to 132 mm or 108 mm to 124 mm.

Further, for example, the turnup end 2A of the inner ply 2 may also be located radially above the terminal end 7 of the first apex 11 at distance H₂ of 130 mm or in a range of from 114 mm to 146 mm or 122 mm to 138 mm.

Turnups 1A, 2A are preferably located radially outward of the apex tip 7, and preferably higher than the chafer ending 123 of chafer 122.

Turnup 4A is preferably located radially inward of the apex tip 7.

Preferably, the axially innermost ply 1 has the axially outermost turnup end 1A.

There is at least one carcass outer ply 5 that encases the turn-ups 1A, 2A, 3A, 4A, of the inner carcass plies 1, 2, 3, 4. The axially outer ply 5 may, for example, be only partially wound around the bead core 103 over a portion or circular arc corresponding to an angle at the center of the circle circumscribed on the bead core 103 equal to 180° or less so that the ends 5A of the outer ply 5 is situated radially inward of the reference line XX.

Preferably, there is an additional outer carcass ply 6 having an end 6A. The additional axially outer ply 6 may, for example, also be only partially wound around the bead core 103 over a portion or circular arc corresponding to an angle at the center of the circle circumscribed on the bead core 103 equal to 180° or less so that the ends 6A of the outer ply 6 is situated radially inward of the reference line XX. Preferably, the portion of circular arc of the additional outer ply 6 is smaller than the portion of circular arc of the outer ply 5.

The plies are formed from different materials or comprise reinforcements of different materials and/or different cord constructions so for instance that the axially innermost plies 1, 2 are formed from reinforcement cords or comprise reinforcements that have a higher percent elongation at break than the axially outer carcass plies 5, 6.

Ply cords 1, 2 are preferably reinforcement cords having the highest break strength.

Preferably, the reinforcement cords of the plies 1, 2 are formed from a nylon cable having a 1890 d/2x2 construction as shown below, i.e., formed from twisting together two sets of two1890 denier yarns twisted together. Each set is preferably twisted at 4 turns/2.54 cm in the Z direction, and then all of the yarns twisted together at 4 turns/2.54 cm in the S direction.

The ply cords 1, 2 are preferably formed from cable or cord having the highest break strength and lowest elongation at break, relative to ply cords 3-6.

More preferably, ply cords 1, 2 have a 10-20% higher break strength than the ply cords 3, 4.

More preferably, ply cords 1, 2 have a 30-50% higher break strength than ply cords 5, 6.

Ply cords 3, 4 are preferably formed from or comprise reinforcements that have a higher elongation than cords 1, 2 under the same load.

A cord construction suitable for ply cords 3, 4 may be formed from a nylon cable or cord having a 1890 d/2/2 5x6 construction, i. e., formed from a nylon cable or cord having a 1890 d/2x2 construction as shown below, i.e., formed from twisting together two sets of two1890denier yarns twisted together. Each set is preferably twisted at 5 turns/2.54 cm in the Z direction, and then all of the yarns twisted together at 6 turns/2.54 cm in the S direction.

The down ply cords 5, 6 are preferably formed from or comprise reinforcements having the highest elongation properties, and the lowest break strength, relative to ply cords 1-4. More preferably, ply cords 5, 6 are formed from or comprise a nylon cable or cord with 3 yarns having a linear density of 1890 denier, each yarn being preferably individually twisted at 6 turns/2.54 cm in the Z direction, and then all of the yarns preferably twisted together at 6 turns/2.54 cm in the S direction.

In summary, the axially innermost carcass plies 1, 2 are preferably formed from reinforcement cables/cords having the lowest elongation properties the and highest strength properties.

Down carcass plies 5, 6 are preferably formed from reinforcement cables/cords having the highest elongation properties and lowest strength at break.

Carcass plies 3, 4 are preferably formed from cables/cords having medium elongation properties, i. e., having higher elongation properties than plies 1, 2 and lower elongation properties than plies 5, 6.

Carcass plies 3, 4 are preferably formed from cables/cords having a higher break strength than carcass plies 5, 6 and a lower break strength than plies 1, 2.

At least one of the axially inner plies 1-4 has a M300 rubber modulus in the range of from 11 to 19 MPa, preferably 13 to 17 MPa, while at least one axially outer ply 5, 6 has a M300 rubber modulus in the range of from 20 to 25 MPa, preferably 21 to 24 MPa.

The angle of the inner plies 1-4 is measured by the angle shown in Fig. 1 designated as PLA. The angle PLA is the angle between the axial direction (line X-X) and the axially outermost ply 4 of the axially inner plies 1-4, or the inner ply closest to the bead core at a location radially outward of the bead core and radially inward of the apex tip 7. Preferably, PLA ranges from 40-55 degrees as measured on a cut section of a new tire that is not mounted on a rim and is not inflated.

A flipper 8 may separate the bead core 103 from the carcass reinforcement 10 and be formed of radial textile cords identical to the carcass ply cords (or different cords). One terminal end of the flipper 8 may, for example, may extend a radial distance LI of 23 mm or in a range of from 20 mm to 26 mm from the line XX. Three ends may thus be arranged radially above the terminal end 7 of the first apex 11 and be staggered between the terminal end and a location of the sidewall where the tire has a maximum axial width. The other terminal end of the flipper 8 may extend a radial distance L_{E} from the line XX equal to 13 mm or in a range of from 10 mm to 16 mm.

The tire bead core 103 may be supplemented by a reinforcement ply or outer first chafer 121 reinforced with radial textile cords. The rubber chafer 121 may permit a better distribution of the pressures between the tire and its service wheel, as well as assuring protection of the carcass plies against damage upon mounting. The axially outer end of the first chafer 121 is preferably be slightly above (such as about 20 mm above or in a range of from 15 mm to 25 mm above) the reference line XX.

An example tire with a bead structure as shown in Figure 1 includes two annular bead structures 100, a carcass 10 extending between the bead portions through two sidewall portions 101, and a tread portion (not shown). The carcass 10 has at least one carcass ply 1 of parallel cords turned up about the bead portions 100 and the tire has a belt reinforcement layer (not shown) disposed radially outside the carcass 10 and radially inside the tread portion. Each annular bead portion 100 includes an annular bead core 103 having the carcass ply or plies 1-4 turned up around the bead core, a first apex 11 disposed adjacent and radially outward of the bead core, a second apex 112 disposed axially outward of the bead core and the carcass ply or plies, a first chafer 121 disposed adjacent the carcass ply or plies and axially outward of the bead core, and a second chafer 122 disposed adjacent and axially outward of the second apex.

The first apex 11 is preferably constructed of a material with a 300 percent modulus between 18 MPa to 25 MPa, more preferably 20 MPa to 23 MPa.

The second apex 112 is preferably constructed of a material with a 300 percent modulus between 14 MPa to 18 MPa, more preferably 15 MPa to 17 MPa.

The first chafer 121 is preferably constructed of a material with a 300 percent modulus between 17 MPa to 21 MPa, more preferably 18 MPa to 20 MPa.

The second chafer 122 is preferably constructed of a material with a 300 percent modulus between 7 MPa to 9 MPa.

The axially outer end of the second chafer 122 is preferably 60 mm or in a range of from 50 mm to 70 mm above the line XX. The axially outer end of the second chafer 122 preferably covers the contact area between the tire and the wheel flange under a 200% rated loading condition.

The sidewall portion 101 is preferably constructed of a material with a 300 percent modulus between 3 MPa and 8 MPa, more preferably 4 MPa to 7 MPa.

As stated above, a bead structure 100 in accordance with the present invention produces excellent durability and reduced chafing at the rim. This bead structure 100 thus enhances the performance of the pneumatic tire, even though the complexities of the structure and behavior of the pneumatic tire are such that no complete and satisfactory theory has been propounded.

## Claims

1. A pneumatic tire comprising two annular bead portions each having a bead core (103), a carcass extending between the bead portions (103) through sidewall portions (16) and a tread portion, wherein the carcass includes at least two axially inner plies (1, 2) which extend down from the tread and axially inward of the bead core (103), said at least two axially inner plies being wound around the bead core (103) forming respective turn-ups (1A, 2A), each turn-up (1A, 2A) being located axially outward of the bead core (103), and wherein said carcass further includes at least one axially outer ply (5, 6) which extends down from the tread towards the bead core (103) and axially outward of the bead core (103); wherein
(i) at least one of the axially inner plies (1, 2) is formed using reinforcements having a higher break strength than the reinforcements of the other plies or the at least one axially outer ply (5); and/or
(ii) at least one of the axially inner plies (1, 2) is formed using reinforcements having a lower % elongation at break than the reinforcements of the other plies or the at least one axially outer ply (5);
**characterized in that** the tire has a first axially outer ply (5) which extends down from the tread towards the bead core (103) and which is positioned axially outward of the bead core (103), and a second axially outer ply (6) which extends down from the tread towards the bead core (103) and which is positioned axially outward of the bead core (103), and wherein the reinforcements of the at least two of the axially inner plies (1, 2) have a higher break strength than the reinforcements of the two axially outer plies (5, 6).

2. The pneumatic tire of claim 1 wherein the reinforcements of at least two of the axially inner plies (1, 2) have a higher break strength than the reinforcements of the other plies or the at least one axially outer ply (5).

3. The pneumatic tire of at least one of the previous claims wherein an angle (PLA) of the axially inner plies (1, 2) is in the range of from 40 to 55 degrees and/or wherein the angle (PLA) of the one or more axially outer plies (5, 6) is in the range of from 40 to 50 degrees, wherein the angle (PLA) is the angle between an axis XX' extending through the center of the bead core (103) and parallel to the axis of rotation of the tire and the axially outermost ply of the axially inner plies or the inner ply closest to the bead core (103) at a location radially outward of the bead core and radially inward of an apex tip (7), and wherein the angle (PLA) is measured in the unmounted, uninflated new condition of the tire.

4. The pneumatic tire of at least one of the previous claims wherein the one or more axially outer plies (5, 6) comprise nylon cord reinforcements preferably having a 1890denier/3 cord construction.

5. The pneumatic tire of at least one of the previous claims wherein the axially inner plies (1, 2) comprise nylon cord reinforcements preferably having a 1890denier/2/2 4x4 cord construction.

6. The pneumatic tire of at least one of the previous claims further comprising two additional plies (3, 4) located axially outward of the first and second axially inner plies (1, 2), wherein said additional plies (3, 4) are formed using cords having a lower break strength than the cords of the first and second axially inner plies (1, 2).

7. The pneumatic tire of claim 5 or 6 wherein the two additional plies (3, 4) comprise nylon cords with a 1890denier/2/2 5x6 cord construction.

8. The pneumatic tire of at least one of the previous claims wherein the reinforcements of the axially outermost ply (6) are formed from a lower modulus material than the reinforcements of the axially inner plies (1, 2).

9. The pneumatic tire of at least one of the previous claims wherein the axially outermost ply (6) comprises cords having a 1890d/3 6x6 cord construction.

10. The pneumatic tire of at least one of the previous claims wherein the reinforcements of the axially inner plies (1, 2) have a 5% to 50%, alternately a 15% to 35%, higher break strength than the reinforcements of the axially outer plies (5, 6).

11. The pneumatic tire of at least one of the previous claims wherein the reinforcements of the axially inner plies (1, 2) have a 5% to 20% higher elongation at break, alternately a 10% to 15% higher elongation at break, than the reinforcements of the axially outer carcass plies (5, 6).

12. The pneumatic tire of at least one of the previous claims further comprising two additional plies (3, 4) located axially outward of the at least two axially inner plies (1, 2), wherein the reinforcements of said two additional plies (3, 4) preferably have a higher % elongation at break than the reinforcements of the at least two axially inner plies.

13. The pneumatic tire of at least one of the previous claims wherein the tire is an aircraft tire, preferably a radial aircraft tire.

## Patentansprüche

1. Luftreifen, umfassend zwei ringförmige Wulstabschnitte, die jeweils einen Wulstkern (103), eine sich zwischen den Wulstabschnitten (103) durch Seitenwandabschnitte (16) erstreckende Karkasse und einen Laufflächenabschnitt aufweisen, wobei die Karkasse wenigstens zwei axial innere Lagen (1, 2) beinhaltet, die sich von der Lauffläche nach unten und von dem Wulstkern (103) axial nach innen erstrecken, wobei die wenigstens zwei axial inneren Lagen um den Wulstkern (103) gewunden sind, um jeweilige Umschläge (1A, 2A) auszubilden, wobei jeder Umschlag (1A, 2A) von dem Wulstkern (103) axial nach außen gelegen ist und wobei die Karkasse ferner wenigstens eine axial äußere Lage (5, 6) beinhaltet, die sich von der Lauffläche nach unten in Richtung des Wulstkerns (103) und von dem Wulstkern (103) nach außen erstreckt; wobei
(i) wenigstens eine der axial inneren Lagen (1, 2) unter Verwendung von Verstärkungen mit einer höheren Bruchfestigkeit als die der Verstärkungen der anderen Lagen oder der wenigstens einen axial äußeren Lage (5) ausgebildet ist; und/oder
(ii) wenigstens eine der axial inneren Lagen (1, 2) unter Verwendung von Verstärkungen mit einer niedrigeren prozentualen Bruchdehnung als die der Verstärkungen der anderen Lagen oder der wenigstens einen axial äußeren Lage (5) ausgebildet ist;
**dadurch gekennzeichnet, dass** der Reifen eine erste axial äußere Lage (5), die sich von der Lauffläche nach unten in Richtung des Wulstkerns (103) erstreckt und die von dem Wulstkern (103) axial nach außen positioniert ist, und eine zweite axial äußere Lage (6), die sich von der Lauffläche nach unten in Richtung des Wulstkerns (103) erstreckt und von dem Wulstkern (103) axial nach außen positioniert ist, aufweist, und wobei die Verstärkungen der wenigstens zwei der axial inneren Lagen (1, 2) eine höhere Bruchfestigkeit aufweisen als die Verstärkungen der zwei axial äußeren Lagen (5, 6).

2. Luftreifen nach Anspruch 1, wobei die Verstärkungen von wenigstens zwei der axial inneren Lagen (1, 2) eine höhere Bruchfestigkeit aufweisen als die Verstärkungen der anderen Lagen oder der wenigstens einen axial äußeren Lage (5).

3. Luftreifen nach wenigstens einem der vorhergehenden Ansprüche, wobei ein Winkel (PLA) der axial inneren Lagen (1, 2) in dem Bereich von 40 bis 55 Grad liegt und/oder wobei der Winkel (PLA) von der einen oder den mehreren axial äußeren Lagen (5, 6) in dem Bereich von 40 bis 50 Grad liegt, wobei der Winkel (PLA) der Winkel zwischen einer Achse XX', die sich durch die Mitte des Wulstkerns (103) und parallel zu der Rotationsachse des Reifens erstreckt, und der axial äußersten Lage der axial inneren Lagen oder der dem Wulstkern (103) nächstgelegenen axial inneren Lage an einer Stelle radial nach außen von dem Wulstkern und radial nach innen von einer Scheitelspitze (7) ist, und wobei der Winkel (PLA) in dem nicht montierten, nicht aufgepumpten Neuzustand des Reifens gemessen wird.

4. Luftreifen nach wenigstens einem der vorhergehenden Ansprüche, wobei die eine oder die mehreren axial äußeren Lagen (5, 6) Nylonkordverstärkungen mit vorzugsweise einer 1890-Denier/3-Kordkonstruktion umfassen.

5. Luftreifen nach wenigstens einem der vorhergehenden Ansprüche, wobei die axial inneren Lagen (1, 2) Nylonkordverstärkungen mit vorzugsweise einer 1890-Denier/2/2-4x4-Kordkonstruktion umfassen.

6. Luftreifen nach wenigstens einem der vorhergehenden Ansprüche, ferner umfassend zwei zusätzliche Lagen (3, 4), die von der ersten und der zweiten axial inneren Lage (1, 2) axial nach außen gelegen sind, wobei die zusätzlichen Lagen (3, 4) unter Verwendung von Korden mit einer niedrigeren Bruchfestigkeit als die der Korde der ersten und der zweiten axial inneren Lage (1, 2) ausgebildet sind.

7. Luftreifen nach Anspruch 5 oder 6, wobei die zwei zusätzlichen Lagen (3, 4) Nylonkorde mit einer 1890-Denier/2/2-5x6-Kordkonstruktion umfassen.

8. Luftreifen nach wenigstens einem der vorhergehenden Ansprüche, wobei die Verstärkungen der axial äußersten Lage (6) aus einem Material mit niedrigerem Modul als das der Verstärkungen der axial inneren Lagen (1, 2) ausgebildet sind.

9. Luftreifen nach wenigstens einem der vorhergehenden Ansprüche, wobei die axial äußerste Lage (6) Korde mit einer 1890d/3-6x6-Kordkonstruktion umfasst.

10. Luftreifen nach wenigstens einem der vorhergehenden Ansprüche, wobei die Verstärkungen der axial inneren Lagen (1, 2) eine um 5 % bis 50 %, alternativ um 15 % bis 35 %, höhere Bruchfestigkeit aufweisen als die Verstärkungen der axial äußeren Lagen (5, 6).

11. Luftreifen nach wenigstens einem der vorhergehenden Ansprüche, wobei die Verstärkungen der axial inneren Lagen (1, 2) eine um 5 % bis 20 % höhere Bruchdehnung, alternativ eine um 10 % bis 15 %, höhere Bruchdehnung aufweisen als die Verstärkungen der axial äußeren Karkassenlagen (5, 6).

12. Luftreifen nach wenigstens einem der vorhergehenden Ansprüche, ferner umfassend zwei zusätzliche Lagen (3, 4), die von den wenigstens zwei axial inneren Lagen (1, 2) axial nach außen gelegen sind, wobei die Verstärkungen der zwei zusätzliche Lagen (3, 4) vorzugsweise eine höhere prozentuale Bruchdehnung aufweisen als die Verstärkungen der wenigstens zwei axial inneren Lagen.

13. Luftreifen nach wenigstens einem der vorhergehenden Ansprüche, wobei der Reifen ein Flugzeugreifen ist, bevorzugt ein Radialflugzeugreifen.

## Revendications

1. Bandage pneumatique comprenant deux portions annulaires faisant office de talons possédant chacune une tringle de talon (103), une carcasse s'étendant entre les portions (103) faisant office de talons en passant par des portions (16) faisant office de flancs et une portion faisant office de bande de roulement ; dans lequel la carcasse englobe au moins deux nappes internes en direction axiale (1, 2) qui s'étendent vers le bas à partir de la bande de roulement et vers l'intérieur en direction axiale de la tringle de talon (103), lesdites au moins deux nappes internes en direction axiale venant s'enrouler autour de la tringle de talon (103) en formant des retournements respectifs vers le haut (1A, 2A), chaque retournement vers le haut (1A, 2A) étant disposé à l'extérieur de la tringle de talon (103) en direction axiale ; et dans lequel ladite carcasse englobe en outre au moins une nappe externe en direction axiale (5, 6) qui s'étend vers le bas à partir de la bande de roulement en direction de la tringle de talon (103) et à l'extérieur de la tringle de talon (103) en direction axiale ; dans lequel
(i) au moins une des nappes internes en direction axiale (1, 2) est réalisée en utilisant des renforcements possédant une résistance à la rupture supérieure à celle des renforcements des autres nappes ou de ladite au moins une nappe externe en direction axiale (5) ; et/ou
(ii) au moins une des nappes internes en direction axiale (1, 2) est réalisée en utilisant des renforcements possédant un pourcentage d'allongement à la rupture inférieur à celui des renforcements des autres nappes ou de ladite au moins une nappe externe en direction axiale (5) ;
**caractérisé en ce que** le bandage pneumatique possède une première nappe externe en direction axiale (5) qui s'étend vers le bas à partir de la bande de roulement en direction de la tringle de talon (103) et qui est disposée à l'extérieur de la tringle de talon (103) en direction axiale, et une seconde nappe externe en direction axiale (6) qui s'étend vers le bas à partir de la bande de roulement en direction de la tringle de talon (103) et qui est disposée à l'extérieur de la tringle de talon (103) en direction axiale; et dans lequel les renforcements desdites au moins deux des nappes internes en direction axiale (1, 2) possèdent une résistance à la rupture supérieure à celle des renforcements des deux nappes externes en direction axiale (5, 6).

2. Bandage pneumatique selon la revendication 1, dans lequel les renforcements d'au moins deux des nappes internes en direction axiale (1, 2) possèdent une résistance à la rupture supérieure à celle des renforcements des autres nappes ou de ladite au moins une nappe externe en direction axiale (5).

3. Bandage pneumatique selon au moins une des revendications précédentes, dans lequel un angle (PLA) formé par les nappes internes en direction axiale (1, 2) se situe dans la plage de 40 à 55° et/ou dans lequel l'angle (PLA) formé par lesdites une ou plusieurs nappes externes en direction axiale (5, 6) se situe dans la plage de 40 à 50° ; dans lequel l'angle (PLA) représente l'angle formé entre un axe XX' s'étendant en passant par le centre de la tringle de talon (103) et parallèlement à l'axe de rotation du bandage pneumatique et la nappe la plus externe en direction axiale parmi les nappes internes en direction axiale ou la nappe la plus interne la plus proche de la tringle de talon (103) à un endroit situé à l'extérieur en direction radiale de la tringle de talon et à l'intérieur en direction radiale d'une pointe du bourrage sur tringle (7) ; et dans lequel l'angle (PLA) est mesuré à l'état nouveau, non monté, non gonflé du bandage pneumatique.

4. Bandage pneumatique selon au moins une des revendications précédentes, dans lequel lesdites une ou plusieurs nappes externes en direction axiale (5, 6) comprennent des renforcements de câblés en nylon, possédant de préférence une structure de câblé de type 1890 deniers/3.

5. Bandage pneumatique selon au moins une des revendications précédentes, dans lequel les nappes internes en direction axiale (1, 2) comprennent des renforcements de câblés en nylon possédant de préférence une structure de câblé de type 4x4 de 1890 deniers/2/2.

6. Bandage pneumatique selon au moins une des revendications précédentes, comprenant en outre deux nappes supplémentaires (3, 4) disposées à l'extérieur en direction axiale de la première et de la seconde nappe interne en direction axiale (1, 2) ; dans lequel lesdites nappes supplémentaires (3, 4) sont réalisées en utilisant des câblés dont la résistance à la rupture est inférieure à celle des câblés de la première et de la seconde nappe interne en direction axiale (1, 2).

7. Bandage pneumatique selon la revendication 5 ou 6, dans lequel les deux nappes supplémentaires (3, 4) comprennent des câblés en nylon possédant une structure de câblé de type 5x6 de 1890 deniers/2/2.

8. Bandage pneumatique selon au moins une des revendications précédentes, dans lequel les renforcements de la nappe la plus externe en direction axiale (6) sont réalisés à partir d'une matière dont le module est inférieur à celui des renforcements des nappes internes en direction axiale (1, 2).

9. Bandage pneumatique selon au moins une des revendications précédentes, dans lequel la nappe la plus externe en direction axiale (6) comprend des câblés possédant une structure de câblé de type 6x6 de 1890 deniers/3.

10. Bandage pneumatique selon au moins une des revendications précédentes, dans lequel les renforcements des nappes internes en direction axiale (1, 2) possèdent une résistance à la rupture supérieure à concurrence de 5 % à 50 %, en variante de 15 % à 35 % à celle des renforcements des nappes externes en direction axiale (5, 6).

11. Bandage pneumatique selon au moins une des revendications précédentes, dans lequel les renforcements des nappes internes en direction axiale (1, 2) possèdent un allongement à la rupture supérieur à concurrence de 5 % à 20 %, en variante un allongement à la rupture supérieur à concurrence de 10 % à 15 % à celui des renforcements des nappes de carcasse externes en direction axiale (5, 6).

12. Bandage pneumatique selon au moins une des revendications précédentes, comprenant en outre deux nappes supplémentaires (3, 4) disposées à l'extérieur en direction axiale desdites au moins des nappes internes en direction axiale (1, 2); dans lequel les renforcements desdites deux nappes supplémentaires (3, 4) possèdent de préférence un pourcentage d'allongement à la rupture supérieur à celui des renforcements desdites au moins deux nappes internes en direction axiale.

13. Bandage pneumatique selon au moins une des revendications précédentes, dans lequel le bandage pneumatique est un bandage pneumatique pour aéroplane, de préférence un bandage pneumatique pour aéroplane du type à nappe radiale.
